(19) Europäisches Patentamt / European Patent Office / Office européen des brevets

(11) **EP 3 516 827 B1**

(12) **EUROPEAN PATENT SPECIFICATION**

(45) Date of publication and mention
of the grant of the patent:
**03.11.2021 Bulletin 2021/44**

(21) Application number: **16823070.4**

(22) Date of filing: **30.11.2016**

(51) Int Cl.:
*H04L 12/28* (2006.01)     *H04L 27/00* (2006.01)
*H04L 27/26* (2006.01)

(86) International application number:
**PCT/US2016/064194**

(87) International publication number:
**WO 2018/057046 (29.03.2018 Gazette 2018/13)**

(54) **MODEM TRANSMISSION FREQUENCY RANGE EXTENSION**

ERWEITERUNG EINES MODEMÜBERTRAGUNGSFREQUENZBEREICHS

EXTENSION DE PLAGE DE FRÉQUENCES DE TRANSMISSION DE MODEM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2016 US 201662397085 P**

(43) Date of publication of application:
**31.07.2019 Bulletin 2019/31**

(73) Proprietor: **INTEL Corporation
Santa Clara, CA 95054 (US)**

(72) Inventors:
• **SHULMAN, Shaul
Ramat Gan 52572 (IL)**
• **TAL, Noam
53600 Givataim (IL)**
• **ARAMBEPOLA, Bernard
Enfield EN1 2BJ (GB)**

(74) Representative: **Kraus & Weisert
Patentanwälte PartGmbB
Thomas-Wimmer-Ring 15
80539 München (DE)**

(56) References cited:
**US-A1- 2005 084 004     US-A1- 2010 158 086
US-B2- 7 463 707**

**Description**

<u>FIELD</u>

The present disclosure relates to the field of modems and in particular to methods and apparatus for extending the transmission frequency band of a modem.

**BACKGROUND**

Next generation cable technology (DOCSIS 3.1) will require the ability to operate in a full duplex mode (e.g., sending and receiving at the same frequency and the same time). At the first stage of DOCSIS deployment the CMTS (cable modem termination system) is required to be able to operate in full duplex mode, however, the cable modem is not required to be able to transmit and receive at the same time in the same frequency band. In the first stage of DOCSIS deployment the cable modem should be able to modulate the upstream channels in a new, extended band and to dynamically switch between transmission and reception over this extended band.

US 2010 / 158 086 A1 discloses a system where a digital signal is received at an analog front end and remodulated to a target frequency. The remodulated signal is then converted to an analog signal and output. US 7 463 707 B2 discloses modulating and upconverting/downconverting based on a reference master frequency.

**SUMMARY**

The present invention is defined in the appended independent claims to which reference should be made. Advantageous features are set out in the appended dependent claims.

**BRIEF DESCRIPTION OF THE DRAWINGS**

Some examples of circuits, apparatuses and/or methods will be described in the following by way of example only. In this context, reference will be made to the accompanying Figures.

FIG. 1 illustrates a cable system.

FIG. 2 illustrates one embodiment of cable system configured to provide an extended transmission frequency range while maintaining synchronization with a master clock.

FIG. 3 illustrates one embodiment of remodulator circuitry configured to provide an extended transmission frequency range while maintaining synchronization with a master clock.

FIG. 4 illustrates one embodiment of remodulator circuitry configured to provide an extended transmission frequency range while maintaining synchronization with a master clock by using a test signal as a synchronization signal.

FIG. 5 illustrates one embodiment of remodulator circuitry configured to provide an extended transmission frequency range while maintaining synchronization with a master clock using frequency pre-correction based on an offset determined by demodulator circuitry.

FIG. 6 illustrates one embodiment of demodulator circuitry configured to determine the offset between a received signal and a master clock signal.

FIG. 7 illustrates one embodiment of a method of providing an extended transmission frequency range by remodulating, in an analog front end, a digital modulated signal from a system on chip while maintaining synchronization with a master clock.

FIG. 8 illustrates an example device configured to provide an extended frequency range, according to one embodiment of the disclosure.

**DETAILED DESCRIPTION**

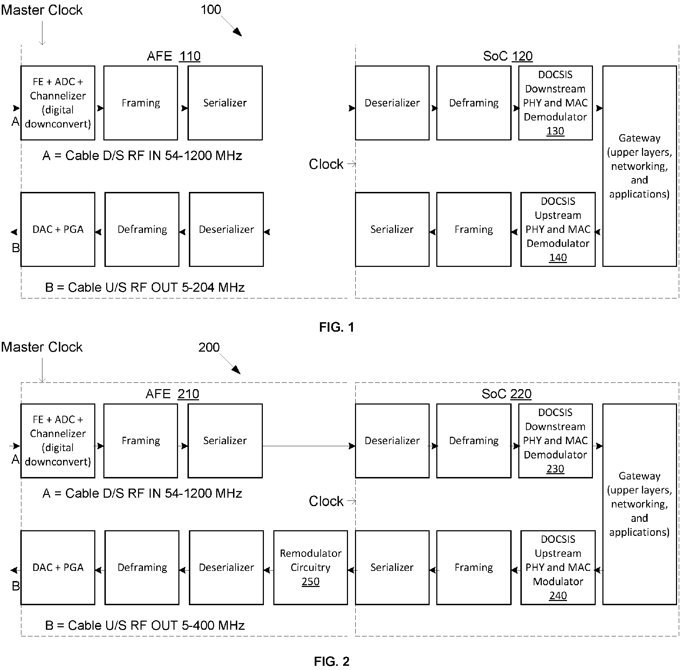

Figure 1 illustrates a common type of cable modem or gateway system 100 that includes an analog front end (AFE) device 110 and a system on a chip (SoC) 120 that together perform the function of a cable modem (CM) per the DOCSIS 3.1 specification. In general, in an upstream path, the AFE 110 converts a received cable signal to a digital signal that can be processed by demodulator circuitry 130 in the SoC 120. In the downstream path, the AFE 110 converts and amplifies a digital modulated signal from modulator circuitry 140 in the SoC 120 to an analog signal for transmission to a receiving device. The SoC 120 may have two orthogonal frequency division multiple access (OFDMA) channels and 8 legacy single carrier channels. For the purposes of this description, certain communication protocols (e.g., OFDMA), frequency ranges and channels will be provided for contextual purposes. The particular frequencies discussed are exemplary only, and not intended to limit the scope of the claimed invention.

In the system 100 of FIG. 1, the AFE 100 receives a radio frequency (RF) cable signal from a head end or cable modem termination system (CMTS) (not shown) in a frequency range of 53-1200 MHz. The AFE 110 also receives a master clock signal from the CMTS or headend. A front end (FE) analog to digital converter (ADC) and Channelizer block converts the analog RF signal to digital downconverts the digital signal to baseband. Framing and Serializer blocks process the digital signal for transmission to the SoC 120. The SoC 120 includes Deserializer and Deframing blocks that process the signal for input to the demodulator circuitry 130. The demodulator circuitry 130 extracts and processes the information encoded in the cable signal. A Gateway block transmits packets that carry the extracted information to other devices and applications in a network.

In the upstream path, the modulator circuitry 140 modulates information received from the Gateway block into a digital modulated signal in a frequency range of 5-200 MHz.

The digital modulated signal is framed by a Framing block and serialized by a Serializer block for transmission to the AFE 110. The digital modulated signal is deserialized by a Deserializer block and deframed by a Deframing block prior to being converted to an RF signal and amplified by a digital to analog converter (DAC) and programmable gain amplifier (PGA) block. The RF signal output by the AFE 110 is in a frequency range of 5-204 MHz, per DOCSIS 3.1.

The SoC 120 modulates DOCSIS channels digitally and sends a composite "real" signal to the AFE 110 for digital to analog conversion and amplification. The AFE 110 generates a clock output to the SoC for the purpose of synchronizing the analog signals that the AFE 110 is generating with the digital signals that the SoC 120 is generating. This is because DOCSIS 3.1 specifies that the frequency of the CM's upstream modulated channels be synchronized to the master clock of the CMTS.

Next generation DOCSIS systems may use simultaneous reception and transmissions of signals on the same frequency. To support this duplex operation, the cable modem termination system (CMTS) may perform self-interference cancellation and while the CM alternates between reception and transmission on the same frequency band. This technique is possible on a passive node (e.g., Node+0 architecture) that doesn't include amplifiers from the optical node to the CM. Also, in this case the traditional "split" between the upstream frequency band and downstream frequency band will no longer be constant, and will vary depending on whether the CM is receiving or transmitting.

In order to enable better utilization of throughput capacity of a single CM in a given time, the CM should be able to transmit over a band wider than the maximum band the CM is capable of modulating. This way it is possible to schedule several CMs' transmissions occupying the larger band, and using over-subscription to allow service operators to offer higher throughput service offerings.

The described methods and systems allow a CM to transmit on a band much wider than the maximum specified in DOCSIS 3.1, which is 204MHz, without significantly altering the SoC. Figure 2 illustrates one embodiment of a cable modem system 200 that includes an SoC 220 that includes similar functional components to the SoC 120 of FIG. 1. An AFE 210 includes remodulator circuitry 250 that receives channels in digital form in fixed frequency locations from the SoC 220 and "remodulates" or upconverts the channels to a new desired frequency (hereinafter "target frequency"). In other embodiments, the remodulator circuitry may downconvert one or more channels to a lower target frequency. Thus the signal output by the AFE 210 in the downstream path is in an expanded frequency range of 5-400 MHz.

The SoC 220 may have two OFDMA channels and 8 legacy single carrier channels. Since the SoC 220 supports modulation of signals up to a Nyquist frequency of 300 MHz, a frequency translation at the AFE 210 is performed. The AFE 210 receives the DOCSIS OFDMA upstream channels from the SoC in fixed frequency locations. The AFE 210 upconverts these channels to a new location as instructed by a command from the SoC 220. In one embodiment, the legacy SC-QAM channels are not remodulated and their final locations are set in the SoC (in the band 5-85 MHz).

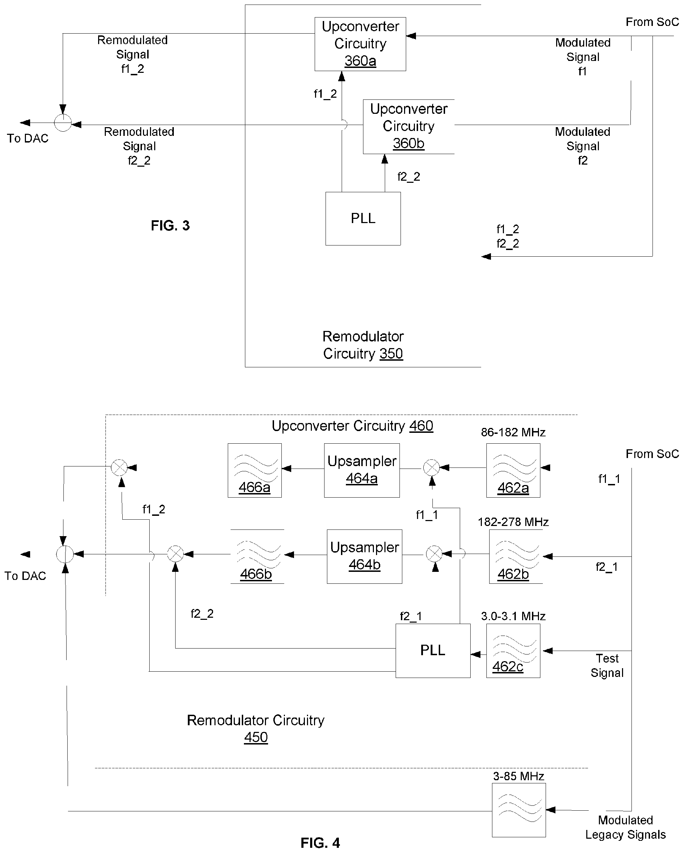

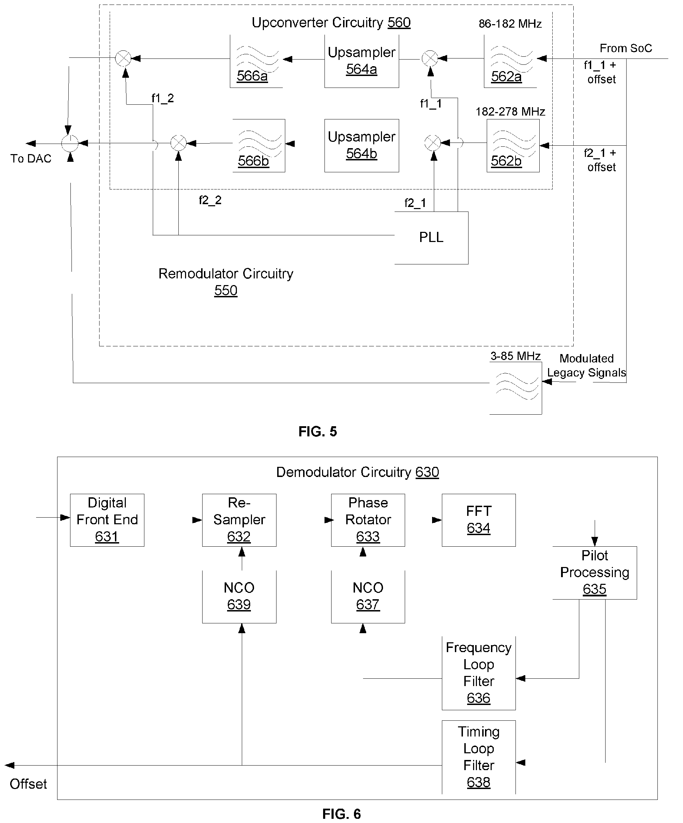

The frequency carrier synchronization to the master clock is maintained despite the additional frequency translation in the AFE 210. The synchronization may be achieved by sending a test signal from the SoC 220 to the AFE 210 so that the AFE 210 can lock the up-conversion clock to the test signal (see FIG. 4). Alternatively, the synchronization to the master clock can be achieved by pre-correction of the frequency at the SoC 220 (see FIGs. 5 and 6). Synchronization by way of pre-correction is possible since the SoC 220 has knowledge of the frequency difference between the clock signal from the AFE 210 and the master clock, as well as the target frequency.

It can be seen that the cable system of Figure 2 enables the re-modulation of channels to a wider frequency range by altering the AFE 110 and not the SoC 120 of FIG. 1. The cable system of Figure 2 synchronizes the upstream channel frequency of the CM 200 to the master clock even though the AFE 210 is performing a frequency conversion that affects the eventual carrier frequency accuracy.

FIG. 3 illustrates one embodiment of remodulator circuitry 350 that is added to the AFE to extend the transmission range of the CM. The remodulator circuitry 350 remodulates the DOCSIS upstream channels to a new center frequency while maintaining frequency lock to the CMTS master clock. The remodulator circuitry 350 includes upconverter circuitry 360 for each OFDMA channel (a and b in the illustrated embodiment). The upconverter circuitry 360 receives the digital modulated signal in each channel (having frequencies, fCH1 and fCH2, respectively) from the SoC and upconverts the digital modulated signals to digital "remodulated" signals having the target frequencies f1_2 and f2_2, respectively. The remodulator circuitry 350 includes a phase locked loop (PLL) that generates a local oscillator signal at each target frequency f1_2 and f2_2 used by the upconverter circuitry 360 to generate the remodulated signals. In one embodiment, a mixer component (not shown) of the upconverter circuitry performs complex upconversion of the digital modulated signals. The remodulated signals are provided to the DAC block of the AFE to be converted to analog and amplified for transmission to a receiving device. While the term "upconverter" is used to describe the circuitry that remodulates the digital modulated signal, in some embodiments, the target frequency f2 is lower than the channel frequency f1 and other embodiments the target frequency is higher than the channel frequency.

FIG. 4 illustrates one example embodiment of remodulator circuitry 450 that utilizes a test signal from the SoC to synchronize the remodulated signal with the master clock signal. The remodulator circuitry 450 includes upconverter circuitry 460 with two chains of components that each process signals in one of the OFDMA channels. Each chain includes a first filter 462a, 462b, a downconverter mixer, an upsampler 464a, 464b, a second filter 466a, 466b, and an upconverter mixer. The first filter is adapted to filter signals in the original frequency range (e.g., 86-182 MHz for Channel 1 and 182-278 MHz for Channel 2). The downconverter mixers downconvert the filtered signal from the second filters 462a, 462b with local oscillator signals having a frequency f1_1, f2_1, respectively. The local oscillator signals are generated by a PLL. In one embodiment, the downconverter mixers perform complex downconversion of the digital modulated signals to baseband frequency.

The upsamplers 464a, 464b upsample the downconverted signals at a relatively high sample rate (e.g., 1 GHz in one embodiment). The second filters 466a, 466b are adapted to filter signals in the new target frequency range. The upconverter mixers mix the filtered upsampled signals with LO signals having the target frequencies f1_2, f2_2, respectively. In one embodiment, the upconverter mixers perform complex upconversion of the digital modulated signals. The results of the mixing operations are the remodulated signals which have a new target frequency in an expanded frequency range. In one embodiment, the SoC provides a command to the AFE to cause the AFE to remodulate selected channels. The SoC may specify the new target frequencies to be used during remodulation.

In the embodiment of FIG. 4, the PLL in the remodulator circuitry 450 utilizes a test signal that is synchronized to the master clock to generate the LO signals. It is possible to configure one of the legacy channels into a BPSK test signal per the DOCSIS 3.0 specification. This narrow band signal is then assigned a fixed frequency in the SoC. The test signal is filtered by filter 462c and used to synchronize the PLL. The upconverter circuitry 460 then re-modulates the OFDMA channels to their new locations in the wider than 204 MHz band. Since the test signal sent from the SoC is frequency locked to the master clock through the downstream signal, the remodulated signals are also frequency locked to the master clock, thus satisfying DOCSIS 3.1 synchronization specification.

FIG. 5 illustrates one example embodiment of remodulator circuitry 550 that utilizes pre-correction at the SoC to synchronize the remodulated signal with the master clock signal. The remodulator circuitry 550 includes upconverter circuitry 560 with two chains of components that each process signals in one of the OFDMA channels. However, the frequency of the signals in each OFDMA channel have been "precorrected" to compensate for frequency offset that occurs due to the remodulation performed by remodulator circuitry 550. Each chain includes a first filter 462a, 462b, a downconverter mixer, an upsampler 564a, 564b, a second filter 566a, 566b, and an upconverter mixer. The first filter is adapted to filter signals in the original frequency range (e.g., 86-182 MHz for Channel 1 and 182-278 MHz for Channel 2).

The upconverter mixers mix the filtered signal from the second filters 562a, 562b with local oscillator signals having a frequency f1_1, f2_1, respectively. The local oscillator signals are generated by a PLL. The upsamplers 564a, 564b upsample the downconverted signals at a relatively high sample rate (e.g., 1 GHz in one embodiment). The second filters 566a, 566b are adapted to filter signals in the new target frequency range. The upconverter mixers mix the filtered upsampled signals with LO signals having the target frequencies f1_2, f2_2, respectively. The results of the mixing operations are the remodulated signals which have a new target center frequency in an expanded frequency range. In one embodiment, the SoC provides a command to the AFE to cause the AFE to remodulate selected channels. The SoC may use this command to specify the target frequencies to be used during remodulation.

The pre-correction of the digital modulated signals provided to the AFE's remodulator circuitry 550, which is performed by the SoC, will now be described. Recall that the remodulator circuitry 550 performs down conversion by a nominal SoC carrier frequency f1 to the baseband frequency, filtering, and then up-conversion to an nominal output RF carrier frequency f2, the appropriate pre-corrected carrier frequency at the SoC is given by:

$$f1' = f1 - \Delta f \qquad\qquad \text{EQ 1}$$

where Δf is the offset from the nominal SoC carrier frequency added by the AFE frequency manipulation, which can be expressed as:

$$\Delta f = (f2 - f1) \times f\_offset\_ppm/1e6 \qquad\qquad EQ\ 2$$

The quantity f_offset_ppm is the clock rate offset in ppm. In one embodiment, the clock rate offset f_offset_ppm is extracted from the master clock by the downstream demodulator 230 (see FIG. 2) from the downstream DOCSIS signals (e.g., OFDM and Single Carrier QAM).

Figure 6 functionally illustrates a segment of one embodiment of a digital OFDM demodulator 630. The input to the digital demodulator circuitry 630 may be centered at zero frequency (i.e., baseband frequency) or at a non-zero intermediate frequency (IF). A digital front end 631 implements functions such as converting IF to baseband if needed, digital filtering, and gain control. A re-sampler 632, driven by a numerically controlled oscillator (NCO) 639 converts the signal to the OFDM sample rate, which for DOCSIS 3.1 is 204.8 million samples per second. The phase rotator 633 corrects for any frequency offsets in order to align the input to an FFT block 634 to precise baseband.

DOCSIS 3.1 transmissions have pilots, that is, OFDM subcarriers with modulation known to the receiver. Pilot processing circuitry 635 uses these pilots to continually estimate the frequency and timing errors in the transmission. These errors are due to differences in the master clock and the clock signal generated by the AFE (see FIGs. 1 and 2). These errors are fed back via loop filters 636, 638 to numerically controlled oscillators (NCOs) 637, 639 driving the re-sampler 632 and the phase rotator 633.

The initial clock for the demodulator circuitry 630 is derived from a local timing reference such as a crystal oscillator (not shown). There may be minor differences between the timing references of the head end and the CM, although this is not expected to be greater than 100 ppm. The clock recovery loop that contains the timing loop filter 638, the NCO 639 and the re-sampler 632 is designed to continually track these changes and thereby keep the receiver always locked to the transmitter.

It is possible to read the difference or offset between the master clock and the AFE clock frequencies from the timing loop filter 638. The transmitter segment of the CM may use this timing difference to control the upstream transmit clock and the upstream transmit frequency so that the upstream transmission of the CM is correctly aligned in timing and frequency with those at the head end. The SoC may use the calculated offset to pre-correct the digital modulated signals to compensate for the frequency deviation caused by the remodulator circuitry. For example, if an offset of 4 Hz is detected between the master clock signal and the AFE clock signal and the center frequency of Channel 1 ("f1") is 140 MHz, the SoC will modulate the OFDMA signal to a center frequency of 144 MHz (f1 + Δf) so that the resulting remodulated signal will be properly aligned with the master clock.

Although OFDMA has been used in the description above, similar principles apply to other types of modulation, for example, single carrier quadrature amplitude modulation (QAM).

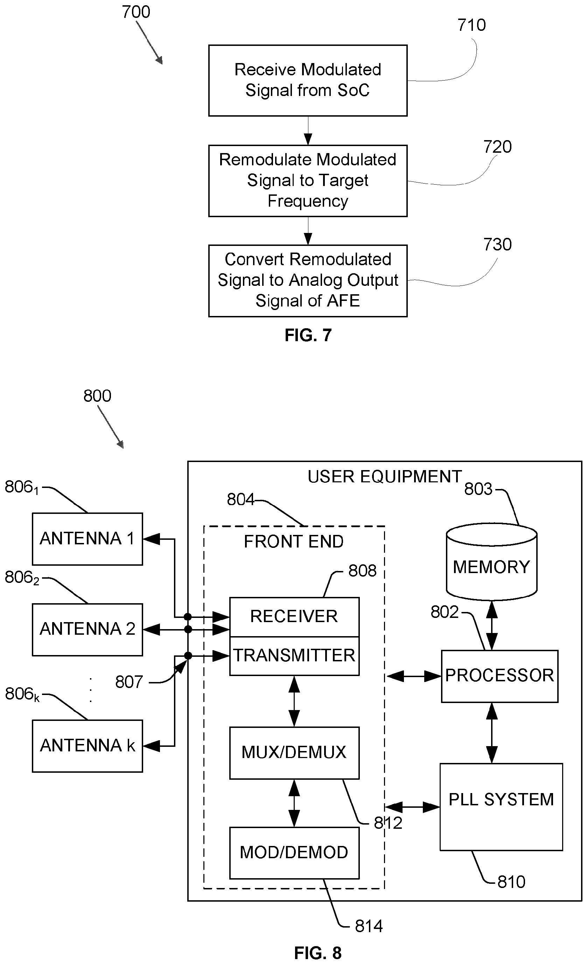

FIG. 7 illustrates one embodiment of a method 700 for extending the transmission range of a CM by remodulating, within an AFE, a signal from an SoC. The method includes, at 710, receiving, with an analog front end component, a digital modulated signal having a first frequency from a system on chip (SoC) and synchronized with a master clock signal. At 720 the digital modulated signal is remodulated to a remodulated signal having a target frequency. The remodulated signal is synchronized with the master clock signal. The method includes, at 730, converting the remodulated signal to an analog output signal of the analog front end component.

It can be seen from the foregoing description that the described remodulator circuitry extends the upstream transmission range of a modem system. Also, the band above 108 MHz can be dynamically allocated to be part of the receive band or the transmit band. This way a CM in a service group can transmit on that band, while other can receive. The CMTS is able to transmit and receive on this frequency at the same time - hence, full duplex operation is enabled. Any CM is either transmitting or receiving on a given frequency at a given time.

To provide further context for various aspects of the disclosed subject matter, FIG. 8 illustrates a block diagram of an embodiment of device 800 (e.g., cable modem or gateway, etc.) related to access of a network (e.g., base station, wireless access point, femtocell access point, and so forth) that can enable and/or exploit features or aspects of the disclosed aspects.

The device 800 can be utilized with one or more aspects of the frequency range extension techniques described herein according to various aspects. The user device 800, for example, comprises a digital baseband processor 802 that can be coupled to a data store or memory 803, a front end 804 (e.g., an RF front end, an acoustic front end, or the other like front end) and a plurality of antenna ports 807 for connecting to a plurality of antennas $806_1$ to $806_K$ (K being a positive integer). The antennas $806_1$ to $806_K$ can receive and transmit signals to and from one or more wireless devices such as access points, access terminals, wireless ports, routers and so forth, which can operate within a radio access network or other communication network generated via a network device (not shown).

The device 800 can be a radio frequency (RF) device for communicating RF signals, an acoustic device for communicating acoustic signals, or any other signal communication device, such as a computer, a personal digital assistant, a mobile phone or smart phone, a tablet PC, a modem, a notebook, a router, a switch, a repeater, a PC, network device, base station or a like device that can operate to communicate with a network or other device according to one or more different communication protocols or standards.

The front end 804 can include a communication platform, which comprises electronic components and associated circuitry that provide for processing, manipulation or shaping of the received or transmitted signals via one or more receivers or transmitters (e.g. transceivers) 808, a mux/demux component 812, and a mod/demod component 814. The front end 804 is coupled to the digital baseband processor 802 and the set of antenna ports 807, in which the set of antennas $806_1$ to $806_K$ can be part of the front end. The front end 804 may be configured to perform the remodulation techniques described herein to extend the frequency range of the device 800. In one aspect, the user equipment device 800 can comprise a phase locked loop system 810.

The processor 802 can confer functionality, at least in part, to substantially any electronic component within the mobile communication device 800, in accordance with aspects of the disclosure. As an example, the processor 802 can be configured to execute, at least in part, executable instructions that cause the front end to remodulate signals to selected frequencies. Thus the processor 802 may embody various aspects of the remodulator circuitry of Figures 2-6, as a multi-mode operation chipset that remodulates a signal from an SoC to extend a transmission frequency range.

The processor 802 is functionally and/or communicatively coupled (e.g., through a memory bus) to memory 803 in order to store or retrieve information necessary to operate and confer functionality, at least in part, to communication platform or front end 804, the phase locked loop system 810 and substantially any other operational aspects of the phase locked loop system 810. The phase locked loop system 810 includes at least one oscillator (e.g., a VCO, DCO or the like) that can be calibrated via core voltage, a coarse tuning value, signal, word or selection process.

The processor 802 can operate to enable the mobile communication device 800 to process data (e.g., symbols, bits, or chips) for multiplexing/demultiplexing with the mux/demux component 812, or modulation/demodulation via the mod/demod component 814, such as implementing direct and inverse fast Fourier transforms, selection of modulation rates, selection of data packet formats, inter-packet times, etc. Memory 803 can store data structures (e.g., metadata), code structure(s) (e.g., modules, objects, classes, procedures, or the like) or instructions, network or device information such as policies and specifications, attachment protocols, code sequences for scrambling, spreading and pilot (e.g., reference signal(s)) transmission, frequency offsets, cell IDs, and other data for detecting and identifying various characteristics related to RF input signals, a power output or other signal components during power generation.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the invention.

The foregoing description of one or more implementations provides illustration and description, but is not intended to be exhaustive or to limit the scope of the example embodiments to the precise form disclosed. Modifications and variations are possible in light of the above teachings or may be acquired from practice of various implementations of the example embodiments.

Various illustrative logics, logical blocks, modules, and circuits described in connection with aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine.

Besides those already mentioned above, many modifications and variations of the above embodiments may be made without departing from the scope of the invention as defined by the appended claims.

## Claims

1. A method for use in an analog front end component (210; 804) of a modem, the method comprising:

   receiving, by the analog front end component (210; 804), a digital modulated signal having a first frequency from a system on chip, SoC (220) of the modem, wherein the digital modulated signal is synchronized with a master clock signal;
   remodulating the digital modulated signal to a remodulated signal having a target frequency by a remodulation circuitry (250; 350; 450; 550) of the analog front end component (210; 804), wherein the remodulated signal is synchronized with the master clock signal; and

converting the remodulated signal to an analog output signal of the analog front end component by an analog-to-digital converter of the analog front end component (210; 804), the method further comprising:
pre-correcting the digital modulated signal such that the first frequency is selected to compensate for frequency offset with respect to the master clock that is caused by the remodulating of the digital modulated signal, and determining the frequency offset using a demodulator (230; 630) in the SoC (220).

2. The method of claim 1, further comprising:

downconverting the digital modulated signal to a baseband frequency; and
upsampling the downconverted digital modulated signal prior to remodulating the digital modulated signal.

3. The method of claim 1, further comprising filtering the digital modulated signal prior to remodulating the digital modulated signal.

4. The method of any of claims claim 1-3, further comprising remodulating the digital modulated signal based on a test signal generated by the SoC (220) that is synchronized with the master clock.

5. The method of any of claims 1-4, further comprising receiving a command from the SoC (220) that specifies the target frequency.

6. Remodulation circuitry (250; 350; 450; 550) for use in an analog front end, AFE (210; 804), of a modem having a system on chip, SoC (220), that provides a digital modulated signal to the AFE (210; 804), comprising:
upconverter circuitry (360a; 360b; 460; 560) configured to:

receive the digital modulated signal from the SoC (220);
remodulate the digital modulated signal to a remodulated signal having a target frequency, wherein the remodulated signal is synchronized with the master clock signal; and
provide the remodulated signal to an analog to digital converter that converts the remodulated signal to an analog output signal of the AFE (210; 804), wherein the SoC (220) is configured to pre-correct the digital modulated signal such that the first frequency is selected to compensate for frequency offset with respect to the master clock that is caused by the remodulating of the digital modulated signal, and wherein the SoC (220) is configured to determine the frequency offset using a demodulator (230; 630) in the SoC (220).

7. The remodulation circuitry of claim 6, further comprising:

a downconverter mixer downconvert the digital modulated signal to a baseband frequency; and
upsampler circuitry (464a, 464b; 564a, 564b) configured to upsample the downconverted digital modulated signal prior to remodulation of the digital modulated signal.

8. The remodulation circuitry of claim 6, further comprising a filter (466a, 466b; 566a; 566b) configured to filter the digital modulated signal prior to remodulation of the digital modulated signal.

9. The remodulation circuitry of any of claims 6-8, further comprising a phase locked loop configured to generate a local oscillator signal having the target frequency based on a test signal generated by the SoC (220) that is synchronized with the master clock, wherein the upconverter circuitry is configured to remodulate the digital modulated signal based on the local oscillator signal.

10. The remodulation circuitry of any of claims 6-9, further configured to receive a command from the SoC (220) that specifies the target frequency.

**Patentansprüche**

1. Verfahren zur Verwendung in einer analogen Frontend-Komponente (210; 804) eines Modems, wobei das Verfahren Folgendes umfasst:

Empfangen durch die analoge Frontend-Komponente (210; 804) eines digitalen modulierten Signals, das eine erste Frequenz besitzt, von einem System-on-Chip, SoC (220), des Modems, wobei das digitale modulierte Signal mit einem Haupttaktsignal synchronisiert ist;
Ummodulieren des digitalen modulierten Signals in ein ummoduliertes Signal, das eine Zielfrequenz besitzt, durch eine Ummodulationsschaltungsanordnung (250; 350; 450; 550) der analogen Frontend-Komponente (210; 804), wobei das ummodulierte Signal mit dem Haupttaktsignal synchronisiert ist; und
Umsetzen des ummodulierten Signals in ein analoges Ausgangssignal der analogen Frontend-Komponente durch einen Analog/Digital-Umsetzer der analogen Frontend-Komponente (210; 804), wobei
das Verfahren ferner Folgendes umfasst:

Vorkorrigieren des digitalen modulierten Signals derart, dass die erste Frequenz gewählt wird, um einen Frequenzversatz in Bezug auf den Haupttakt, der durch das Ummodulieren des digitalen modulierten Signals verursacht wird, auszugleichen, und
Bestimmen des Frequenzversatzes unter Verwendung eines Demodulators (230; 630) im SoC (220).

2. Verfahren nach Anspruch 1, das ferner Folgendes umfasst:

Abwärtsumsetzen des digitalen modulierten Signals zu einer Basisbandfrequenz und
Aufwärtsabtasten des abwärtsumgesetzten digitalen modulierten Signals vor dem Ummodulieren des digitalen modulierten Signals.

3. Verfahren nach Anspruch 1, das ferner ein Filtern des digitalen modulierten Signals vor dem Ummodulieren des digitalen modulierten Signals umfasst.

4. Verfahren nach einem der Ansprüche 1-3, das ferner ein Ummodulieren des digitalen modulierten Signals auf der Grundlage eines Prüfsignals, das durch das SoC (220), das mit dem Haupttakt synchronisiert ist, erzeugt wird, umfasst.

5. Verfahren nach einem der Ansprüche 1-4, das ferner ein Empfangen einer Anweisung von dem SoC (220), das die Zielfrequenz festlegt, umfasst.

6. Ummodulationsschaltungsanordnung (250; 350; 450; 550) zur Verwendung in einem analogen Frontend, AFE (210; 804), eines Modems, das ein System-on-Chip, SoC (220), das ein digitales moduliertes Signal zum AFE (210; 804) liefert, besitzt, die Folgendes umfasst:

eine Aufwärtsumsetzschaltungsanordnung (360a; 360b; 460; 560), die konfiguriert ist zum
Empfangen des digitalen modulierten Signals vom SoC (220) ;
Ummodulieren des digitalen modulierten Signals in ein ummoduliertes Signal, das eine Zielfrequenz besitzt, wobei das ummodulierte Signal mit dem Haupttaktsignal synchronisiert ist; und
Liefern des ummodulierten Signals zu einem Analog/Digital-Umsetzer, der das ummodulierte Signal in ein analoges Ausgangssignal des AFE (210; 804) umsetzt, wobei das SoC (220) konfiguriert ist, das digitale modulierte Signal derart vorzukorrigieren, dass die erste Frequenz gewählt wird, um einen Frequenzversatz in Bezug auf den Haupttakt, der durch das Ummodulieren des digitalen modulierten Signals verursacht wird, auszugleichen, und das SoC (220) konfiguriert ist, den Frequenzversatz unter Verwendung eines Demodulators (230; 630) im SoC (220) zu bestimmen.

7. Ummodulationsschaltungsanordnung nach Anspruch 6, die ferner Folgendes umfasst:

einen Abwärtsumsetzmischer, der das digitale modulierte Signal zu einer Basisbandfrequenz abwärts umsetzt; und
eine Aufwärtsabtastschaltungsanordnung (464a, 464b; 564a, 564b), die konfiguriert ist, das abwärtsumgesetzte digitale modulierte Signal vor der Ummodulation des digitalen modulierten Signals aufwärtsabzutasten.

8. Ummodulationsschaltungsanordnung nach Anspruch 6, die ferner ein Filter (466a, 466b; 566a; 566b) umfasst, das konfiguriert ist, das digitale modulierte Signal vor der Ummodulation des digitalen modulierten Signals zu filtern.

9. Ummodulationsschaltungsanordnung nach einem der Ansprüche 6-8, die ferner einen Phasenregelkreis umfasst, der konfiguriert ist, ein Lokaloszillatorsignal zu erzeugen, das die Zielfrequenz besitzt, auf der Grundlage eines Prüfsignals, das durch das SoC (220), das mit dem Haupttakt synchronisiert ist, erzeugt wird, wobei die Aufwärtsumsetzschaltungsanordnung konfiguriert ist, das digitale modulierte Signal auf der Grundlage des Lokaloszillatorsignals umzumodulieren.

10. Ummodulationsschaltungsanordnung nach einem der Ansprüche 6-9, die ferner konfiguriert ist, eine Anweisung von dem SoC (220), das die Zielfrequenz festlegt, zu empfangen.

**Revendications**

1. Procédé destiné à être utilisé dans un composant frontal analogique (210 ; 804) d'un modem, ce procédé comprenant :

   la réception, par le composant frontal analogique (210 ; 804), d'un signal modulé numérique ayant une première fréquence provenant d'un système sur puce, SoC (220), du modem, ce signal modulé numérique étant synchronisé avec un signal d'horloge maîtresse ;
   la re-modulation du signal modulé numérique en un signal re-modulé ayant une fréquence cible par des circuits de re-modulation (250 ; 350 ; 450 ; 550) du composant frontal analogique (210 ; 804), ce signal re-modulé étant synchronisé par le signal d'horloge maîtresse ; et
   la conversion du signal re-modulé en un signal de sortie analogique du composant frontal analogique par un convertisseur analogique-numérique du composant frontal analogique (210 ; 804),
   ce procédé comprenant en outre :

   la correction préalable du signal modulé numérique de manière à ce que la première séquence soit sélectionnée de façon à compenser le décalage de fréquence par rapport à l'horloge maîtresse qui est causé par la re-modulation du signal modulé numérique, et
   la détermination du décalage de fréquence en utilisant un démodulateur (230 ; 630) dans le SoC (220).

2. Procédé selon la revendication 1, comprenant en outre :

   la conversion descendante du signal modulé numérique en une fréquence de bande de base ; et
   l'échantillonnage ascendant du signal modulé numérique converti de manière descendante avant la re-modulation du signal modulé numérique.

3. Procédé selon la revendication 1, comprenant en outre le filtrage du signal modulé numérique avant la re-modulation du signal modulé numérique.

4. Procédé selon l'une quelconque des revendications 1 à 3, comprenant en outre la re-modulation du signal modulé numérique en se basant sur un signal d'essai généré par le SoC (220) qui est synchronisé avec l'horloge maîtresse.

5. Procédé selon l'une quelconque des revendications 1 à 4, comprenant en outre la réception d'une commande venant du SoC (220) qui spécifie la fréquence cible.

6. Circuits de re-modulation (250 ; 350 ; 450 ; 550) destinés à être utilisés dans un composant frontal analogique (210 ; 804) d'un modem ayant un système sur puce, SoC (220), qui fournit un signal modulé numérique au composant frontal analogique (210 ; 804), comprenant :
   des circuits de conversion ascendante (360a ; 360b ; 460 ; 560) configurés de façon à :

   recevoir le signal modulé numérique du SoC (220) ;
   re-moduler le signal modulé numérique en un signal re-modulé ayant une fréquence cible, ce signal re-modulé étant synchronisé avec le signal d'horloge maîtresse ; et à
   fournir le signal re-modulé à un convertisseur analogique-numérique qui convertit le signal re-modulé en un signal de sortie analogique du composant frontal analogique (210 ; 804), le SoC (220) étant configuré de façon à corriger de manière préalable le signal modulé numérique de manière à ce que la première fréquence soit sélectionnée de façon à compenser le décalage de fréquence par rapport à l'horloge maîtresse qui est causé par la re-modulation du signal modulé numérique, et le SoC (220) étant configuré de façon à déterminer le décalage de fréquence en utilisant un démodulateur (230 ; 630) dans le SoC (220).

7. Circuits de re-modulation selon la revendication 6, comprenant en outre :

un mélangeur de conversion descendante pour convertir de manière descendante le signal modulé numérique en une fréquence de bande de base ; et

des circuits d'échantillonnage ascendant (464a, 464b ; 564a, 564b) configurés de façon à échantillonner de manière ascendante le signal modulé numérique converti de manière descendante avant la re-modulation du signal modulé numérique.

8. Circuits de re-modulation selon la revendication 6, comprenant un filtre (466a, 466b ; 566a ; 566b) configuré de façon à filtrer le signal modulé numérique avant la re-modulation du signal modulé numérique.

9. Circuits de re-modulation selon l'une quelconque des revendications 6 à 8, comprenant en outre une boucle à verrouillage de phase configurée de façon à générer un signal d'oscillateur local ayant la fréquence cible en se basant sur un signal d'essai généré par le SoC (220) qui est synchronisé avec l'horloge maîtresse, les circuits de conversion ascendante étant configurés de façon à re-moduler le signal modulé numérique en se basant sur le signal d'oscillateur local.

10. Circuits de re-modulation selon l'une quelconque des revendications 6 à 9, configurés de façon à recevoir une commande du Soc (220) qui spécifie la fréquence cible.

Master Clock                    100

**AFE 110**

FE + ADC + Channelizer (digital downconvert) | Framing | Serializer

A

A = Cable D/S RF IN 54-1200 MHz

Clock

**SoC 120**

Deserializer | Deframing | DOCSIS Downstream PHY and MAC Demodulator 130

Gateway (upper layers, networking, and applications)

DAC + PGA | Deframing | Deserializer

B

B = Cable U/S RF OUT 5-204 MHz

Serializer | Framing | DOCSIS Upstream PHY and MAC Demodulator 140

**FIG. 1**

Master Clock                    200

**AFE 210**

FE + ADC + Channelizer (digital downconvert) | Framing | Serializer

A

A = Cable D/S RF IN 54-1200 MHz

Clock

**SoC 220**

Deserializer | Deframing | DOCSIS Downstream PHY and MAC Demodulator 230

Gateway (upper layers, networking, and applications)

DAC + PGA | Deframing | Deserializer | Remodulator Circuitry 250

B

B = Cable U/S RF OUT 5-400 MHz

Serializer | Framing | DOCSIS Upstream PHY and MAC Modulator 240

**FIG. 2**

11

FIG. 3

FIG. 4

**FIG. 5**

**FIG. 6**

**FIG. 7**

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010158086 A1
- US 7463707 B2